# EUROPEAN PATENT SPECIFICATION

(11) **EP 4 316 984 B1**
(45) Date of publication and mention of the grant of the patent: **01.10.2025**
(21) Application number: 22188358.0
(22) Date of filing: 02.08.2022
(51) Int. Cl.: B64D 11/00, B64C 1/06

(54) **FASTENING STRUCTURE FOR A MONUMENT AND AN OVERHEAD STORAGE BIN AND VEHICLE**
BEFESTIGUNGSKONSTRUKTION FÜR EIN MONUMENT UND EINEN ÜBERKOPF-VORRATSBEHÄLTER UND FAHRZEUG
STRUCTURE DE FIXATION POUR UN MONUMENT ET BAC DE RANGEMENT SUSPENDU ET VÉHICULE

(43) Date of publication of application: 07.02.2024
(73) Proprietor: Airbus Operations GmbH, 21129 Hamburg (DE)
(72) Inventor: Poppe, Andreas, 21129 Hamburg (DE); Müller, Florian, 21129 Hamburg (DE); Benthien, Hermann, 21129 Hamburg (DE)
(74) Representative: KASTEL Patentanwälte PartG mbB

(56) References cited:
- EP-A1- 3 231 703
- US-A1- 2018 354 601
- US-A1- 2021 031 922
- US-B1- 6 883 753

## Description

The invention relates a fastening structure which can be used to fasten a monument and an overhead storage bin to an attachment structure of an interior of a vehicle such as an aircraft.

In addition to the passenger seats, aircraft cabins of passenger aircraft also comprise fixtures that are provided for use by the crew or by the passengers of the aircraft. Such fixtures include, for example, toilets, galleys, bar fixtures, supports for entertainment systems etc, and are referred to as monuments. Due to the restricted space available in aircraft cabins, such monuments typically have a very integrated and compact structure and are additionally frequently provided as integral modules. Such monuments are typically anchored in a fixed position on the interior of the vehicle. In addition to one or more monuments, an aircraft cabin typically includes overhead storage bins, for example for storing luggage.

US Patent No. 6,883,753 B1 discloses a monument support system for an aircraft that includes multiple aircraft frame elements. An adapter bridge is coupled to the aircraft frame elements and has multiple attachment points. A coupling member is coupled to the adapter bridge. The monument is coupled to the frame elements via the adapter bridge and the coupling member.

EP 3 231 703 A1 discloses a truss structure with a tension-only member. Tension-only members readily deform when a compressive load is applied. The tension-only members may be a leaf spring, a strap, a cable, or a rope between two connector ends. The tension-only members are placed diagonally in a truss such that the tension-only members support a load applied in one direction but deflect when a load is applied in an opposite direction. A truss structure with such tension-only members can be flexible to enable a vehicle frame to which it is attached to flex.

US 2021 / 0 031 922 A1 discloses a vehicle with an interior cabin, a primary structure within the interior cabin, a plurality of securing mounts having first ends directly coupled to the primary structure, and second ends, and an overhead support platform system directly coupled to the second ends of the plurality of securing mounts. The overhead support platform system includes at least one adapter rail having a plurality of commodity mounts. At least one commodity is directly coupled to the overhead support platform system. The commodity is adaptively secured to one or more of the plurality of commodity mounts.

US 2018 / 0 354 601 A1 discloses a truss connected to a structure via a fixed rod end attachment and at least one swing-link attachment. A first beam of the truss is connected to a frame member of the structure via a fixed rod end attachment, which locates the truss relative to the frame of the structure. Remaining beams of the truss to be connected to the frame of the structure are attached via swing-link attachments, which can pivot relative to the beam of the truss and the frame of the structure to allow relative movement between the beam and frame. The relative movement allows the structure to flex without imparting additional loads in the truss or the frame of the structure.

Fastening structures which allow not only one or more monuments but also at least one overhead storage bin to be mounted on an attachment structure of an interior of a vehicle easily and reliably are, however, desirable.

According to the invention, as defined in claim 1, a fastening structure that is suitable for a monument and an overhead storage bin is provided. The fastening structure is mountable on an attachment structure of an interior of a vehicle and is used for attaching the monument and the overhead storage bin to the attachment structure of the interior of the vehicle.

The fastening structure comprises a first module for the monument, a second module for the overhead storage bin and a spacer module that is arranged between the first module and the second module. The spacer module is arranged laterally between the first module and second modulein the longitudinal direction of the vehicle.

The first module comprises an elongate body, first strut detachably coupled between the elongate body and a first fastening for fastening the first module to the attachment structure and second strut that is detachably coupled between the elongate body and the first fastening. The second strut extends at an inclined angle to the elongate body.

The first strut and/or the second strut are variably positionable with respect to the elongate body to provide tolerance compensation. The first strut and the second strut are lockable in an end position. The first strut is coupled between the elongate body at a first position and the second strut is coupled to the elongate body of the second position which is spaced apart from the first position.

The first position may be a first end of the elongate body and the second position may be a second end of the elongate body that opposes the first end. The elongate body, together with the first and second struts may form a triangular shape. The elongate body may have the form of a tube which may have a circular cross-section. The elongate body and the first strut may be substantially coplanar. The second strut may be substantially coplanar with the elongate body and the first strut.

The second module has the same basic form as the first module. The second module comprises an elongate body, first strut detachably coupled between the elongate body and a first fastening for fastening the first module to the attachment structure and second strut that is detachably coupled between the elongate body and the first fastening. The second strut extends at an inclined angle to the elongate body. The first strut and/or the second strut are variably positionable with respect to the elongate body to provide tolerance compensation. The first strut and the second strut are lockable in an end position. The first strut is coupled between the elongate body at a first position and the second strut is coupled to the elongate body of the second position which is spaced apart from the first position. The first position may be a first end of the elongate body and the second position may be a second end of the elongate body that opposes the first end. The elongate body, together with the first and second struts may form a triangular shape. The elongate body may have the form of a tube which may have a circular cross-section. The elongate body and the first strut may be substantially coplanar. The second strut may be substantially coplanar with the elongate body and the first strut.

The fastening structure is based on a modular building block type structure and typically includes a plurality of modules that are arranged in a row, typically extending in the longitudinal direction of the vehicle. The first and second struts of each of the modules are variably positionable and allow the position of the elongate body of that individual to be adjusted. This allows the elongate bodies of the various modules to be aligned with respect to one another and with respect to the interior of the vehicle. This allows the components attached to the modules, e.g. overhead storage bin(s) and monument(s) to be better aligned with one another, thus improving the aesthetics and look. Furthermore, load distribution can be made more uniform.

The spacer module comprises an elongate spacer body, a first interface strut having a second fastening for fastening the spacer module to the attachment structure and the second elongate interface strut having a first third fastening for fastening the spacer module to the attachment structure. The elongate spacer body is detachably coupled by a third strut to the first interface strut at a first joint which is positioned intermediate the length of the first interface strut. The elongate spacer body is detachably coupled by a fourth strut to the second interface strut at a second joint that is intermediate the length of the second interface strut.

The spacer module, therefore, includes two elongate interface struts which have a fastening and which are, in the installed position, fastened to the attachment structure. Consequently, the spacer module of the fastening structure provides additional stress distribution paths from the elongate spacer body to the attachment structure and to the vehicle. The spacer interfaces are spaced apart from the housing of the components to be mounted on the fastening structure, e.g. from the housing of the monument due to the third and fourth strut being coupled to the first and second interface strut, respectively, intermediate the length of the respective interface strut.

The vehicle may be an aircraft, such as a passenger aircraft, or a rail vehicle or a road vehicle or a watercraft or a spacecraft. The attachment structure may comprise one or more fuselage frames which are spaced at intervals along the longitudinal direction of the aircraft. In the installed position, the fastening structure is positioned between the monument and the overhead storage bin compartment and the attachment structure.

Not only the overhead storage bin but also the monument are attached to at least one of the modules of the fastening structure so that the same type of module provides a structure which can be used for both a monument and an overhead storage bin. The fastening structure can be used flexibly by appropriate positioning of the spacer module and modules to provide different arrangements of either all overhead storage bins or combinations of one or more monuments with one or more overhead storage bins within the interior of the vehicle. The spacer module may be positioned between two neighbouring modules of the fastening structure, which are to be used for different types of component, for example between a monument and an overhead storage bin, as well as between modules for the same type of component, e.g. monuments.

The elongate spacer body may have the form of a tube and may have a circular cross-section. Each of the third and fourth struts may be variably positionable with respect to the elongate spacer body and with respect to the first interface strut and second interface structure, respectively, in order to provide tolerance compensation. The third strut and the fourth strut are also lockable in an end position. As the third and fourth struts of the spacer module are variably positionable and allow the position of the spacer elongate body to be adjusted. This allows the spacer elongate body to be aligned with respect to the elongate body of the other modules and with respect to the interior of the vehicle.

The first interface strut, the second interface strut and elongate spacer body extend substantially parallel to one another. The fourth strut extends substantially perpendicularly between the elongate spacer body and the second interface structure and may be substantially coplanar with the elongate spacer body and the second interface strut. The third strut extends at an inclined angle to the elongate spacer body and the first interface strut. The inclined angle may be less than 90°. In some embodiments, the third strut extends at an angle to the elongate spacer body and the first interface strut that is substantially 90° or equal to 90°.

The second interface strut may be arranged in a higher plane that the first interface strut such that the fourth strut forms an inclined angle to the third strut. The inclined angle may be less than 90°. In some embodiments, the second interface strut may be arranged in a higher plane that the first interface strut such that the fourth strut forms an angle to the third strut that is substantially 90° or equal to 90°.

In some embodiments, the elongate spacer body has first distal end and a second distal end that opposes the first distal end and the third strut and the fourth strut are both coupled to the second distal end of the elongate spacer body. The first distal end of the elongate spacer body is coupled to the elongate body of the first and/or second module.

In some embodiments, the second fastening is arranged at the first distal end of the first interface strut and the first interface strut comprises a fourth fastening at second distal end that opposes the first distal end. This embodiment may be used to fasten the first interface strut between neighbouring attachment structures, for example neighbouring fuselage frames. Similarly, the third fastening of the second interface strut can be arranged first distal end of the second interface strut and a fifth fastening is arranged at a second distal end of the second interface strut that opposes first distal end. This enables the second interface strut to be fastened between two attachment structures such as two neighbouring fuselage frames.

In some embodiments, the second fastening of the first interface strut, the third fastening of the second interface struts and the first fastening of the first strut of the first module are attached to the same first attachment structure at different positions, for example, at different positions which are spaced apart along the length of the fuselage frame. Similarly, the fourth and fifth fastenings of the spacer module can be attached to the same second attachment structure at different positions such as different positions along the length the same fuselage frame. The first fastening of the second module is attached to the second attachment structure. The second attachment structure is spaced apart from the first attachment structure, typically spaced apart in the longitudinal direction of the vehicle.

In some embodiments, the third and fourth struts of the spacer module each comprise a tolerance compensator. The first interface strut and the second interface strut may also each comprise at least one tolerance compensator. The tolerance compensator may be a spring, for example.

In some embodiments, one or more of the first, second, third and fourth struts are variably positionable with respect to the elongate body to provide tolerance compensation in a longitudinal and in a vertical direction. For example, the strut may have an adjustable length and/or an adjustable angular orientation with respect to the elongate body. The length and angular orientation of the strut is lockable in order to provide the unit with a mechanically stable frame structure.

In some embodiments, one or more of the fastenings comprises a spring to provide tolerance compensation and provide improved load distribution between the fastening structure and the attachment structure of the vehicle interior.

In some embodiments, the second strut of the first and/or second module is slidably coupled to the elongate body at one end to provide tolerance compensation. The position of the opposing end of the second strut can be fixed at the fastening. The position of the second strut on the elongate body is lockable so that the inclined angle between the second strut and the elongate body can be fixed in order to provide the unit with a mechanically stable frame structure.

In some embodiments, one or more of the struts comprises an inner member slidably engaged with an outer member to provide an adjustable length. The inner and outer members may be tubular, for example, with the inner member having an outer diameter which is less than the inner diameter of the outer member so that a slidable connection is provided which allows the overall length of the strut to be increased or decreased as desired. The inner and outer members are lockable to one another, for example by using a bolt, to fix the length of the strut.

In some embodiments, the first strut of the first and/or second module is coupled to the elongate body by an articulated or universal joint to provide tolerance compensation. For example, the first strut may be rotatable in a longitudinal direction and around the longitudinal axis of the elongate body and movable in a transverse direction. Again, the position of the first strut is lockable with respect to the elongate body and fastening in order to provide the unit with a mechanically stable frame structure.

In some embodiments, each module comprises two units, each unit having an elongate body and first and second struts as described above for the module. The two units may be arranged vertically and connected to one another by a connection unit. The connection unit of the module comprises a sixth strut and a seventh strut movably coupled with a seventh fastening, wherein the sixth strut is coupled to the elongate body of the first unit and the seventh strut is coupled to the elongate body of the second unit.

In some embodiments, the first joint formed between the third strut and the first interface strut is formed by a ring-shaped connection attached to the distal end of the third strut which is slidably coupled to the outer surface of the first interface strut and which is lockable in an end position in order that the third strut is variably positionable with respect to the elongate spacer body and also with respect to the first interface strut.

In some embodiments, the second joint formed between the fourth strut and the second interface strut is formed by a ring-shaped connection attached to the distal end of the fourth strut which is slidably coupled to the outer surface of the second interface strut and which is lockable in an end position in order that the fourth strut is variably positionable with respect to the elongate spacer body and also with respect to the second interface strut.

In some embodiments, the elongate body of the first module comprises at least one fixture for mounting the monument on the first module.

In some embodiments, the elongate body of the second module comprises at least one fixture for mounting the overhead storage bin on the second module.

In some embodiments, the elongate spacer body comprises at least one fixture for mounting a spacer panel on the spacer module.

The fixture may comprise a bracket, a socket a pin or any fixture which are interlock or be fixed to a further fixture on the respective overhead storage bin, monument or spacer panel. The fixture(s) for the first module, second module and spacer module may be different or of the same type.

In some embodiments, in the installed position, the second interface strut is longitudinally aligned with and detachably connected to the first fastening of the first module. In some embodiments, the elongate spacer body is aligned with the elongate body of the first module and/or the second module. The elongate spacer body may be detachably coupled to the elongate body of the first module and/or the second module.

The elongate body of each of the first and second module is spaced apart from the attachment structure by the first and second struts in a transverse direction, i.e. long the width of the vehicle. The elongate body of the spacer module is spaced apart from the attachment structure by the third and fourth struts. The first distal end of the elongate spacer body may be detachably connected to the first strut. In these embodiments, stress on the spacer body can be distributed into the first module as well as into the spacer module and from there into the attachment structure of the vehicle and the vehicle itself.

In some embodiments, the first module and the second module each further comprise fifth strut which extends from the first strut to a sixth fastening for fastening the respective modules to the attachment structure. The sixth fastening may fasten the fifth strut and module to the attachment structure at a position which is spaced apart from the first fastening. In some embodiments, the sixth fastening is aligned with the second interface strut. The fifth strut of the first and/or second module may be arranged substantially parallel to the fourth strut of the spacer module. This provides additional strength to the fastening structure and assists in load distribution between the modules.

The invention also provides a vehicle. The vehicle comprises a first attachment structure of an interior of the vehicle, the fastening structure of any one of the embodiments described herein, a first component and a second component. The first component is mounted on the first module of the fastening structure and the second component is mounted on the second module of the fastening structure. The first fastening of the first module, the second fastening of the second module as well as the third fastening of the spacer module are fastened to the attachment structure so that, in the installed position, the first component is attached to the attachment structure of the interior of the vehicle by way of the first module and the second component is attached to the attachment structure of the interior of the vehicle by way of the second module. The spacer module is positioned between the first module and the second module. The spacer module is typically positioned laterally positioned between the first module and the second module in the longitudinal direction of the vehicle.

In some embodiments, the vehicle comprises a second attachment structure and the fourth and fifth fastenings of the spacer module are fastened to the second attachment structure such that the first and second interface struts extend between the first and second attachment structures.

In some embodiments, the vehicle is an aircraft and the first and second attachment structures are fuselage frames that are spaced apart along the longitudinal direction of the aircraft. The first and second interface struts of the space module extend between adjacent ones of the fuselage frames.

Since the third and fourth struts are connected to the first and second interface struts intermediate the length of the first and second interface, respectively, the effective area of the spacer module can be adjusted and is less than the distance between first and second attachment structures and consequently, the neighbouring fuselage frames in the case of an aircraft. This allows the space between the first and second component to be adjusted.

The first component may be a monument and the second component may be an overhead storage bin, for example. In some embodiments, the monument comprises a housing with the rear panel and the monument is fastened to the first attachment structure by a fixture extending between the rear panel of the housing of the monument and the first module, in particular, the elongate body of the first module.

In some embodiments, the housing of the monument further comprises an upper panel and at least one side panel. In some embodiments, the monument is further fastened to the attachment structure by a fixture extending between the upper panel of the housing of the monument and the first module.

In some embodiments, a spacer panel is mounted on the spacer module, in particular, on a fixture attached to the elongate spacer body of the spacer module. The spacer panel can be used for aesthetic reasons to fill the space between the two components, for example, the space between a monument and an overhead storage bin. At the same time, the spacer module serves to distribute stress from the monument to the attachment structure and fuselage of the aircraft not only via the first module but also via the spacer module and the second module, since the spacer module is coupled to both the first and second module.

Embodiments of the invention are described in more detail with reference to the accompanying schematic drawings that are listed below
Fig. 1 illustrates an aircraft.
Fig. 2 illustrates a schematic view of an interior of an aircraft with components installed on a fastening structure that is fastened to an attachment structure of an interior of the aircraft.
Fig. 3A illustrates a module of the fastening structure mounted on the attachment structure of the aircraft.
Fig. 3B illustrates an enlarged view of Fig. 3A.
Fig. 4 illustrates a view of a spacer module of the fastening structure mounted on the attachment structure of the aircraft.
Fig. 5 illustrates a view of the spacer module and one of the modules of the fastening structure for installing a component on the attachment structure.
Fig. 6 illustrates a view of the spacer module.

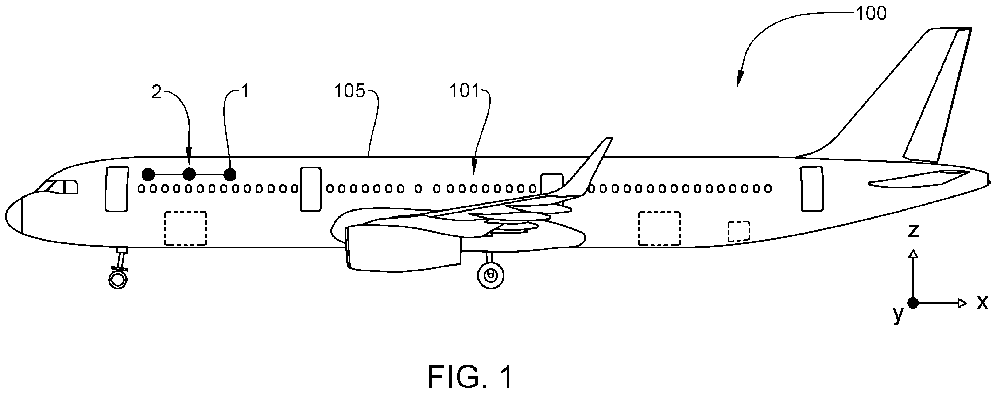

Figure 1 illustrates an aircraft 100 with an interior 101 which has an attachment structure 2 onto which one or more components 1 can be installed. Examples of component 1 are a monument and an overhead storage bin, also known as an overhead luggage compartment, overhead locker or hat rack. A monument is a fixture that is provided for use by the crew or the passengers of the aircraft, such as toilets, galleys, bar fixtures etc, apart from overhead storage bins, and are often provided as a module. The component(s) 1 are fastened to the attachment structure 2 positioned at the interior 100 of the aircraft 100 by way of a fastening structure 3.

In the drawings, the fastening structure 3 will be described with reference to the aircraft 100. However, the fastening structure 3 can also be used to mount other types of components on the interior of other types of vehicles such as motor vehicles, including passenger motor vehicles, lorries and buses or other means of mass transportation such as trains or ships. The fastening means 3 is not restricted to use with overhead luggage bins at any position above the floor but may also be used to install other types of interior components including monuments on the interior 101 of the aircraft 100.

A plurality of components 1 can be arranged next one another in the vehicle, for example along the longitudinal axis of the vehicle, for example along the length of the fuselage 105 of the aircraft 100. A passenger aisle typically runs substantially parallel to the longitudinal axis and the row of components 1. As illustrated with reference to figure 1, the longitudinal axis of the aircraft 100 is referred to as the X direction, the transverse axis as the Y direction, which extends into the plane of the drawing, and the height as the Z direction.

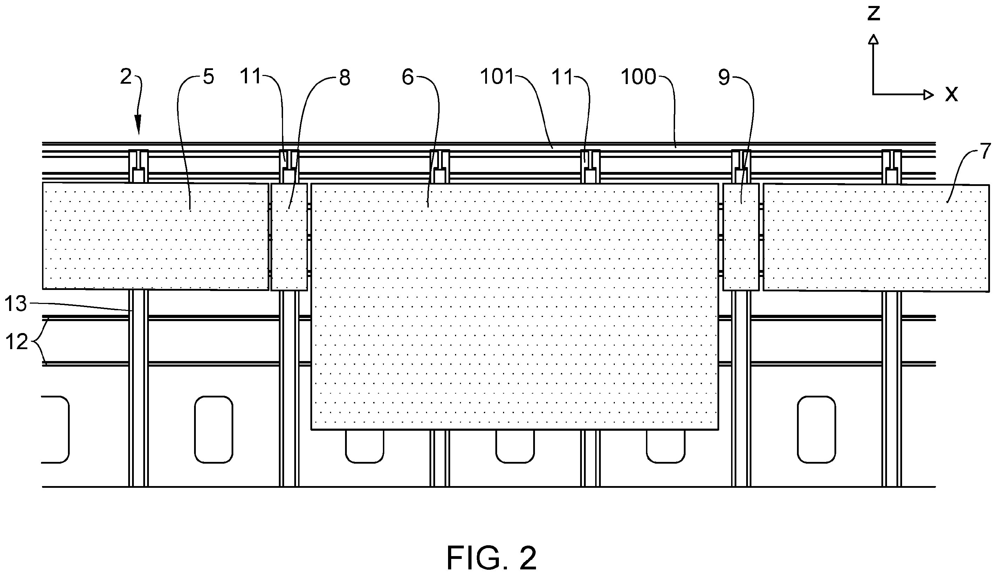

Figure 2 illustrates a schematic view of the interior 101 of the aircraft 100 and illustrates an arrangement in which the fastening structure 3 is used to install a first overhead storage bin 5, a monument 6 and a second overhead storage bin 7 onto the attachment structure 2 of the aircraft 100. The monument 6 is arranged laterally between the first and second overhead storage bins 5, 7 in the longitudinal direction of the aircraft 100. A first spacer 8 is arranged between the first overhead storage bin 5 and the monument 6 and a second spacer 9 is arranged between the monument 6 and the second overhead storage bin 7. The spacers 8, 9 serve to occupy the space between components, typically components of different types such as between the overhead storage bin 5 and the monument 6 and between the monument 6 and the overhead storage bin 7, and also provides a pleasing aesthetic. The spacers 8, 9 may each have the form of a panel, for example.

The fuselage 105 includes an attachment structure 2 in its interior 101. The attachment structure 2 comprises plurality of fuselage frames 11 which are spaced apart at intervals along the longitudinal axis of the aircraft 100 and encircle the fuselage 105. The attachment structure further comprises a plurality of stringers 12 that are positioned on the outer surface 13 of the fuselage frames 11 and which extend in the longitudinal direction of the fuselage 105 between the fuselage frames 11.

The fastening structure 3 is formed by modules 10, 40 which can be suitably arranged to allow the desired arrangement of overhead storage bins and monuments on the fastening structure and on the interior 101 of the aircraft 100. The arrangement shown in figure 2 is, however, just one example and the fastening structure 3 can be used with other arrangements of one or more overhead storage bins and one or more monuments.

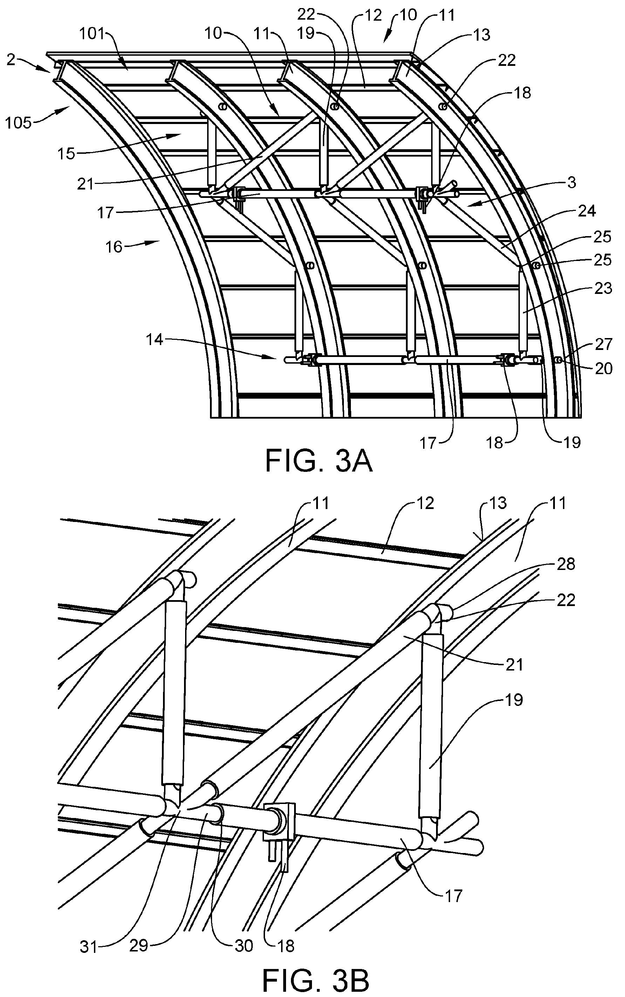

Figure 3A illustrates two modules 10 of the fastening structure 3. One or more module 10 may be used to install one of the first overhead storage bin 5, the monument 6 and the second overhead storage bin 7 on the attachment structure 2 of the interior 101 of the aircraft 100. Figure 3B illustrates an enlarged view of the module 10.

The fastening structure 3 has a modular structure. In this embodiment, each module 10 comprising a first unit 14, a second unit 15 and a connection unit 16 positioned vertically between the first and second units 14, 15. The second unit 15 is positioned above the first unit 14. In some embodiments, each module 10 has a single unit, e.g. the first unit 14.

The first unit 14 and the second unit 15 each comprise an elongate body 17 on which the component 1, for example the overhead storage bin 5, 7 or monument 6, will be fastened. The elongate body 17 may include one or more component fixtures 18 onto which the component 1 may be installed. In some embodiments, the connection structure for attaching the monument 6 to the component fixture 18 of the module 10 is positioned on the rear side of the housing of the monument 6. The connection structure may be variably positionable and lockable in an end position.

The elongate body 17 may have a tubular or pipe form. The first and second units 14, 15 each further include a first strut 19 which is detachably coupled to the elongate body 17 and to a first fastening 20 and a second strut 21 which is detachably coupled to the elongate body 17 and the first fastening 20 and which extends at an inclined angle with respect to the elongate body 17 from the elongate body 17 to the first fastening 20.

The unit 15 also includes a first strut 19 which is detachably coupled to the elongate body 17 and to a second fastening 22 and a second strut 21 which is detachably coupled to the elongate body 17 and the second fastening 22 and which extends at an inclined angle with respect to the elongate body 17 from the elongate body 17 to the second fastening 22.

The elongate body 17, first strut 19 and second strut 21 of each unit 14, 15 form a triangular shape which is adjustable. The first and second struts 19, 21 may each be provided by a tube. The fastening structure 3 may be orientated with respect to the fuselage 105 such that the elongate body 17 of each of the units 14, 15 extends in the longitudinal (X) direction of the fuselage 105.

The connection unit 16 includes fifth and sixth struts 23, 24 and a third fastening 25. The fifth strut 23 extends is detachably coupled to the elongate body 17 of the first unit 14 and to the second fastening 22 and the sixth strut 24 is detachably coupled between the elongate body 17 of the second unit 15 and the third fastening 25 to connect the first and second units 14, 15 and form the module10.

In the mounted position illustrated in figure 3A and 3B, the first fastening 20 of the unit 14 is engaged with a first fitting 27 in the fuselage frame 11, the second fastening 22 of the unit 15 is engaged with the second fitting 26 in the fuselage frame 11 and the third fastening 25 is engaged with a third fitting 28 on the same fuselage frame 11 to fasten the module 10 to the fuselage frame 11.

The fastenings 20, 22, 25 may comprise an elongate connector such as a bolt or screw and the corresponding fitting 26, 27, 28 may comprise an opening or bore, for example an opening in a clip or flange that is fixedly attached to the fuselage frame 11.

One or both of first and second struts 19, 21 of each of the units 14, 15 provide tolerance compensation. In some embodiments, one or both of the first and second struts 19, 21 are coupled to the elongate body 17, for example by a movable connection 29 whereby the movable connection 29 can be fixed or locked in a desired position after adjustment. The movable connection may be a rotatable joint, rotatable about the longitudinal axis of the elongate body 17, a slidable joint, slidable along the longitudinal direction of the elongate body 17 or an articulated or universal joint. The movable connection 29 may be provided by a separate connector structure that couples two elongate bodies 17 to one another in addition to coupling with one of the struts 19, 21 or may be provided by a sleeve that is placed over the elongate body 17 intermediate its length.

In some embodiments, the length of one or both of the first and second struts 19, 21 is adjustable. In these embodiments, one or both of the first and second struts 19, 21 includes an outer member 30 and an inner member 31, which can be seen in the enlarged view of Figure 3B, which are slidably engaged with one another such that the length of the strut can be varied. The length of the strut 19, 21 may be varied to provide tolerance compensation.

The elongate body 17 may have a length that corresponds to the distance between neighbouring fuselage frames 11. The connections 29 between elongate bodies 17 may be positioned such that the first strut 19 of neighbouring units is coupled to neighbouring fuselage frames 11. The connection 29 between the inclined second strut 21 and the elongate body 17 may be spaced apart in the longitudinal direction from the connection 29 at the opposing end of the elongate body 17.

The fastenings 20, 22, 25 may include a spring 32 to provide tolerance and stress compensation between the fastening 20, 22, 25 and the attachment structure 2 and, therefore, between and fastening structure 3 and the attachment structure 2 of the vehicle.

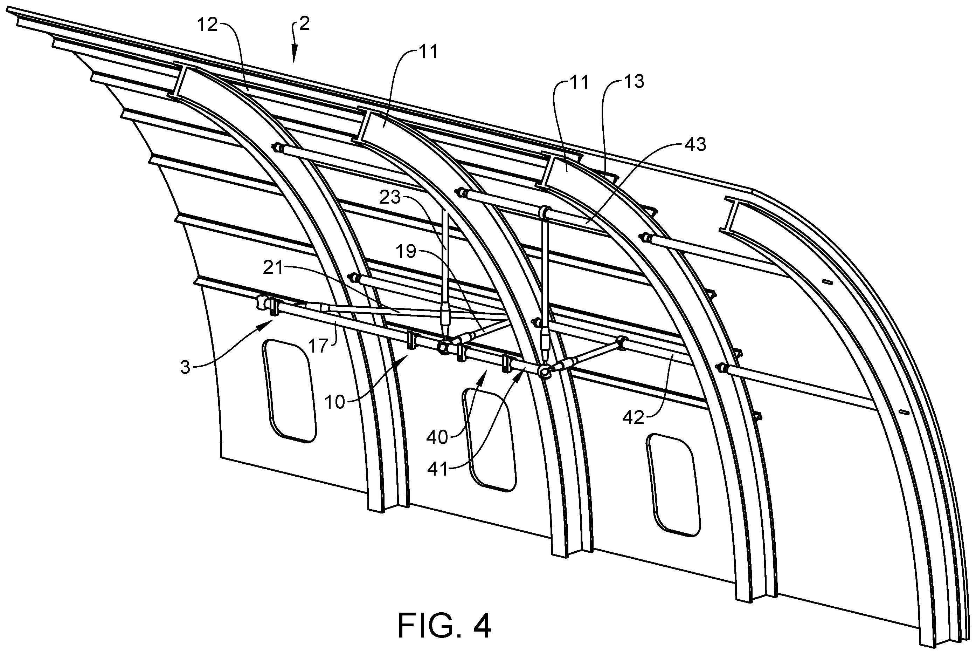

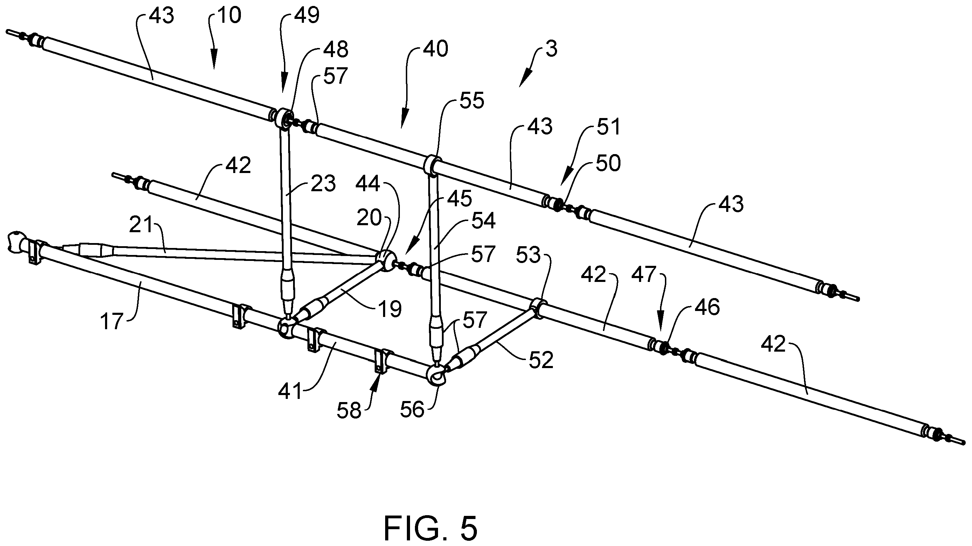

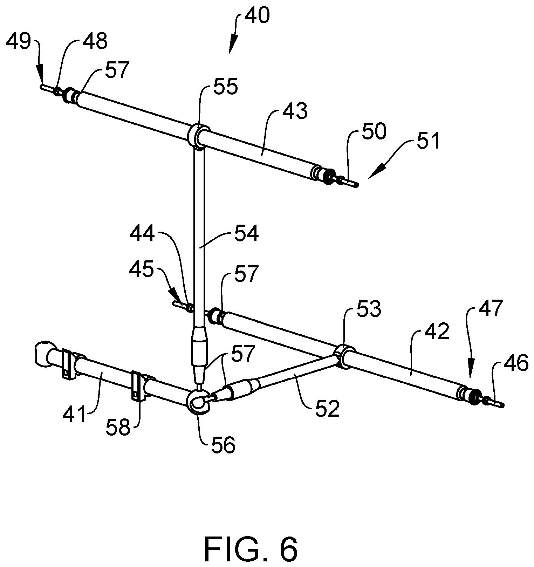

Figure 4 illustrates a view of a spacer module 40 of the fastening structure 3 mounted on the attachment structure 2 of the aircraft 100. The spacer module 40 adjoins the first module 10. Figure 5 illustrates a view of the spacer module 40 and one module 10 of the fastening structure 3 and Figure 6 illustrates a view of the spacer module 40 alone. In the installed position, the spacer module 40 is typically positioned between two modules 10 but may also be positioned between a module 10 and another object, for example an interior skin or panel of the aircraft 100, for example at the end of a row of components.

The spacer module 40 comprises an elongate spacer body 41 that is connected to the elongate body 17 of the module 10, a first interface strut 42 and a second interface strut 43. The first interface strut 42 and the second interface strut 43 each have an elongate form and may have the form of a tube.

The first interface strut 42 has a second fastening 44 on a first distal end 45 that fastens the spacer module 40 to the first fuselage frame 11 and the fastening 20 of the module 10 and a fastening 46 on a second distal end 47 opposing the first distal end 45 that fastens the first interface strut 42 to the neighbouring second fuselage frame 11'. Similarly, the second interface strut 43 has a fastening 48 at a first distal end 49 for fastening the spacer module 40 to the fuselage frame 11 and a fastening 50 on a second distal end 51 opposing the first distal end 49 that fastens the second interface strut 43 to the neighbouring second fuselage frame 11' and the fastening 22. The fastenings 44, 46, 48, 50 may comprise an elongate connector such as a bolt or screw and the corresponding fitting on the fuselage frame 11, 11' may comprise an opening or bore, for example an opening in a clip or flange that is fixedly attached to the fuselage frame 11,11'.

The first interface strut 42, the second interface strut 43 and the elongate spacer body 41 extend substantially parallel to one another and in the longitudinal direction of the aircraft 100. The second interface strut 43 is positioned above the first interface strut 42 in the z direction.

The elongate spacer body 41 is detachably coupled by a third strut 52 to the first interface strut 42 at a first joint 53 that is positioned intermediate the length of the first interface strut 42. The third strut 52 extends substantially perpendicularly to the elongate spacer body 41 and the first interface strut 42. The third strut 52, elongate spacer body 41 and the first interface strut 42 may be substantially coplanar. The elongate spacer body 41 is also is detachably coupled to by a fourth strut 54 to the second interface strut 43 at a second joint 55 that is positioned intermediate the length of the second interface strut 43. The fourth strut 54 extends at an angle to the elongate spacer body 41 and the second interface strut. The fourth strut 54 may be substantially perpendicular to the spacer elongate body 41 and the third strut 52. The third and fourth struts 52, 54 are coupled to the distal end 56 of the elongate spacer body 41 and is spaced apart from the elongate body 17 of the first module 10 by the length of the elongate spacer body 17.

The third and fourth struts 52, 54 each comprise a tolerance compensator 57 and the first interface strut 42 and the second interface strut 43 comprises at least one tolerance compensator 57.

The elongate spacer body 41 is spaced apart from the interior surface of the skin of the fuselage 105 and spaced apart from the fuselage frames 11, 11' in the transverse or y direction. The elongate spacer body 41 comprises at least one fixture 58 with which a spacer panel 59 can be mounted onto the spacer module 40.

The first interface strut 42 is aligned with and detachably connected to the first fastening 20 of the module 10. The elongate bodies 17 of the modules 10 and the elongate spacer body 41 of the spacer module are aligned in the longitudinal direction and are also positioned at the same height. The elongate spacer body 41 is coupled to the elongate body 17 of the neighbouring modules 10. The fourth strut 54 may extend substantially parallel to the strut 23 of the module 10 that extends from the elongate body 17 to the upper fitting 26 and that is positioned between the elongate body 17 and the spacer elongate body 41.

The modules 10 for the components and the spacer module 40 may be formed using the same parts for example, the fastenings, node elements, fixings and joints thus reducing costs and simplifying the installation of the fastening structure. This also allows a flexible cabin layout and different arrangements of the components and, in particular, one or more monuments and overhead storage bins by suitable arrangement of the modules 10 and spacer module(s) 40.

The interface struts 42, 43 extend in the longitudinal direction and are arranged laterally between modules 10. In some embodiments, the modules 10 also include interface struts 42', 43' which are aligned with the first and second interface struts 42, 43 of the spacer module 40. The interface struts 42', 43' of the modules 10 may be coupled to the first and second interface struts 42, 43 of the spacer module 40 such that load can be distributed between the interface struts 42', 43', 42, 43 and between the modules 10 and spacer module 40. The additional interface struts 42', 43' may be used for additional load distribution through the fastening structure 3. This may be useful as a monument is typically heavier than an overhead storage bin.

The width of the spacer 8, 9 is flexible since the third and fourth struts 53, 54 of the spacer module 40 form a joint 53, 55 with the interface struts 42, 43 intermediate the length of the respective interface struts 42, 43. Therefore, the width of the spacer module 40 can be less than the length of the interface struts 42, 43 and less than the spacing between adjacent ones of the fuselage frames 11, 11'. Additionally, the use of the interface struts 42, 43, 42', 43' which extend between neighbouring fuselage frames 11, 11' improves the uniformity of the load distribution throughout the fastening structure 3 and attachment structure 2 and consequently, the aircraft 100. The fastening structure 3 effectively decouples the structure of the aircraft 100 from the arrangement of the interior components, e.g. the overhead storage bins 5, 7 and monuments 6. This also allows the interior components and fastening structure to be assembled outside of the vehicle 100 as a subassembly and the subassembly be installed onto the attachment structure 2 by means of the fastening structure 3.

The spacer module 40 provides a flexible area and an adaptable solution for integrating the monument 6. A monument 6 may have a load which is higher than the load of a component such as an overhead storage bin. This extra load is distributed by means of the longitudinal arranged interface struts 42, 43 which extend between and are connected to the joining ones of the fuselage frames 11. These interface struts 42, 43 enable a smooth load distribution into the attachment structure 2. In some embodiments, interface struts 42', 43' are also introduced into the fastening structure 3 in the modules 10 designated for use with lightweight components such as overhead storage bins.

### List of reference signs:

- 1: component
- 2: attachment structure
- 3: fastening structure
- 5: first overhead storage bin
- 6: monument
- 7: second overhead storage bin
- 8: first spacer
- 9: second spacer
- 10: module
- 11: fuselage frame
- 12: stringer
- 13: outer surface of fuselage frame
- 14: first unit
- 15: second unit
- 16: connection unit
- 17: elongate body
- 18: component fixture
- 19: first strut
- 20: first fastening
- 21: second strut
- 22: second fastening
- 23: fifth strut
- 24: sixth strut
- 25: third fastening
- 26: second fitting
- 27: first fitting
- 28: third fitting
- 29: movable connection
- 30: outer member
- 31: inner member

- 40: spacer module
- 41: elongate spacer body
- 42: first interface strut
- 43: second interface strut
- 44: second fastening
- 45: first distal end
- 46: fourth fastening
- 47: second distal end
- 48: third fastening
- 49: first distal end
- 50: fifth fastening
- 51: second distal end
- 52: third strut
- 53: first joint
- 54: fourth strut
- 55: second joint

- 100: aircraft
- 101: interior
- 105: fuselage

## Claims

1. A fastening structure (3) for a monument (6) and an overhead storage bin (5, 7), the fastening structure (3) being mountable on an attachment structure (2) of an interior of a vehicle (100),
wherein the fastening structure (3) comprises at last one first module (10) for the monument, at least one second module (10) for the overhead storage bin and a spacer module (40) laterally arranged, in the installed position, between the first module (10) and the second module (10) in the longitudinal direction of the vehicle,
wherein the first module (10) and the second module (10) each comprise an elongate body (17), a first strut (19) detachably coupled between the elongate body (17) and a first fastening (20) for fastening the module (10) to the attachment structure (2) and a second strut (21) that is detachably coupled between the elongate body (17) and the first fastening (20) and that extends at an inclined angle to the elongate body (17), wherein the first strut (19) and/or second strut (21) are variably positionable with respect to the elongate body (17) to provide tolerance compensation and are lockable in an end position,
**characterized in that** the spacer module (40) comprises an elongate spacer body (41), a first elongate interface strut (42) having a second fastening for fastening the spacer module (40) to the attachment structure (2) and a second interface strut (43) having a third fastening for fastening the spacer module (40) to the attachment structure (2), wherein the elongate spacer body (41) is detachably coupled by a third strut (52) to the first interface strut (42) at a first joint (53) intermediate the length of the first interface strut (42) and is detachably coupled by a fourth strut (54) to the second interface strut (43) at a second joint (55) intermediate the length of the second interface strut (43) and is coupled to the elongate body (17) of each module (10),
wherein the first interface strut (42), the second interface strut (43) and the elongate spacer body (17) extend substantially parallel to one another, the third strut (52) extends substantially perpendicularly between the elongate spacer body (41) and the first interface strut (42) and the fourth strut (54) extends at an angle between the elongate spacer body (41) and the second interface strut (43).

2. A fastening structure (3) according to claim 1, wherein the third and fourth struts (52, 54) are coupled to a distal end of the elongate spacer body (41).

3. A fastening structure (3) according to any one of claims 1 or 2, wherein the second fastening (44) is arranged at a first distal end (45) of the first interface strut (42) and the first interface strut (42) comprises a fourth fastening (46) at a second distal end (47) that opposes the first distal end (45) and wherein the third fastening (48) is arranged at a first distal end (49) of the second interface strut (43) and the second interface strut (43) comprises a fifth fastening (50) at a second distal end (51) that opposes the first distal end (49).

4. A fastening structure (3) according to any one of claims 1 to 3, wherein the third and fourth struts (52, 54) each comprise a tolerance compensator (57) and/or the first interface strut (19) comprises at least one tolerance compensator (57) and/or the second interface strut (21) comprises at least one tolerance compensator (57).

5. A fastening structure (3) according to any one of claims 1 to 4, wherein the elongate body (17) of the first module (10) comprises at least one fixture (18) for mounting the monument (6) on the first module (10), and/or the second module (10) comprises at least one fixture (18) for mounting the overhead storage bin (5, 7) on the second module (10) and/or the elongate spacer body (17) comprises at least one fixture (18) for mounting a spacer panel (8, 9) on the spacer module (40).

6. A fastening structure (3) according to any one of claims 1 to 5, wherein the elongate spacer body (41) is aligned with and detachably connected to the elongate body (17) of the first module (10) and/or second module (10).

7. A fastening structure (3) according to any one of claims 1 to 6, wherein the first module (10) and the second module (10) each further comprise a fifth strut (23) that extends from the elongate body (17) to a sixth fastening for fastening the respective module (10) to the attachment structure (2) at a position spaced apart from the first fastening (20).

8. A vehicle (100), comprising:
a first attachment structure (2) of an interior (101) of the vehicle (100);
the fastening structure (3) of any one of claims 1 to 7;
wherein the first fastening (20) of the first module, the first fastening (20) of the second module (10) and third fastening (48) of the spacer module (40) are fastened to the first attachment structure (2).

9. A vehicle (100) according to claim 8, wherein the vehicle (100) is an aircraft and further comprises a second attachment structure (11'), wherein the first and second attachment structures (2) are fuselage frames (11, 11') that are spaced apart along the longitudinal direction of the aircraft (100)

10. A vehicle (100) according to claim 9, wherein the first and second interface struts (42, 43) of the spacer module (40) extend between the first and second attachment structures (11, 11').

11. A vehicle (100) according to claim 10, wherein the attachment structure (2) is a first fuselage frame (11), the first, second and third fastenings (20, 44, 48) are fastened to the first fuselage frame (11) and the fourth and fifth fastenings (46, 50) are fastened to a second fuselage frame (11') such that the first and second elongate interface struts (42, 43) extend between the first and second fuselage frames (11, 11').

12. A vehicle (100) according to any one of claims 8 to 11, wherein the first interface strut (42) is aligned with and detachably connected to the first fastening (20) of the first module (10).

13. A vehicle (100) according to any one of claims 8 to 12, further comprising a first component (5, 7) mounted on the first module (10), a second component (6) mounted on the second module (10) and a spacer panel (8, 9) mounted on the spacer module (40).

14. A vehicle according to claim 13, wherein the first component is an overhead storage bin (5, 7) and the second component is a monument (6).

## Patentansprüche

1. Befestigungsstruktur (3) für ein Monument (6) und ein Überkopf-Gepäckfach (5, 7), wobei die Befestigungsstruktur (3) an einer Anbringungsstruktur (2) eines Innenraums eines Fahrzeugs (100) montierbar ist,
wobei die Befestigungsstruktur (3) mindestens ein erstes Modul (10) für das Monument, mindestens ein zweites Modul (10) für das Überkopf-Gepäckfach und ein in der Einbauposition lateral zwischen dem ersten Modul (10) und dem zweiten Modul (10) in Längsrichtung des Fahrzeugs angeordnetes Abstandhaltermodul (40) umfasst,
wobei das erste Modul (10) und das zweite Modul (10) jeweils einen länglichen Körper (17), eine erste Strebe (19), die lösbar zwischen dem länglichen Körper (17) und einer zweiten Befestigung (20) zum Befestigen des Moduls (10) an der Anbringungsstruktur (2) gekoppelt ist, und eine zweite Strebe (21), die lösbar zwischen dem länglichen Körper (17) und der ersten Befestigung (20) gekoppelt ist und sich in einem Neigungswinkel zu dem länglichen Körper (17) erstreckt, umfasst, wobei die erste Strebe (19) und/oder die zweite Strebe (21) in Bezug auf den länglichen Körper (17) variabel positionierbar sind, um einen Toleranzausgleicher bereitzustellen, und in einer Endposition verriegelbar sind,
**dadurch gekennzeichnet, dass** das Abstandhaltermodul (40) einen länglichen Abstandhalterkörper (41), eine erste längliche Schnittstellenstrebe (42) mit einer zweiten Befestigung zum Befestigen des Abstandhaltermoduls (40) an der Anbringungsstruktur (2) und eine zweite Schnittstellenstrebe (43) mit einer dritten Befestigung zum Befestigen des Abstandhaltermoduls (40) an der Anbringungsstruktur (2) umfasst, wobei der längliche Abstandhalterkörper (41) durch eine dritte Strebe (52) an einer ersten Verbindungsstelle (53) zwischen der Länge der ersten Schnittstellenstrebe (42) lösbar mit der ersten Schnittstellenstrebe (42) gekoppelt ist und durch eine vierte Strebe (54) an einer zweiten Verbindungsstelle (55) zwischen der Länge der zweiten Schnittstellenstrebe (43) lösbar mit der zweiten Schnittstellenstrebe (43) gekoppelt ist und mit dem länglichen Körper (17) jedes Moduls (10) gekoppelt ist,
wobei sich die erste Schnittstellenstrebe (42), die zweite Schnittstellenstrebe (43) und der längliche Abstandhalterkörper (17) im Wesentlichen parallel zueinander erstrecken, wobei sich die dritte Strebe (52) im Wesentlichen senkrecht zwischen dem länglichen Abstandhalterkörper (41) und der ersten Schnittstellenstrebe (42) erstreckt und sich die vierte Strebe (54) zwischen dem länglichen Abstandhalterkörper (41) und der zweiten Schnittstellenstrebe (43) in einem Winkel erstreckt.

2. Befestigungsstruktur (3) nach Anspruch 1, wobei die dritte und vierte Strebe (52, 54) mit einem distalen Ende des länglichen Abstandhalterkörpers (41) gekoppelt sind.

3. Befestigungsstruktur (3) nach einem der Ansprüche 1 oder 2, wobei die zweite Befestigung (44) an einem ersten distalen Ende (45) der ersten Schnittstellenstrebe (42) angeordnet ist und die erste Schnittstellenstrebe (42) eine vierte Befestigung (46) an einem dem ersten distalen Ende (45) entgegengesetzten zweiten distalen Ende (47) umfasst und wobei die dritte Befestigung (48) an einem ersten distalen Ende (49) der zweiten Schnittstellenstrebe (43) angeordnet ist und die zweite Schnittstellenstrebe (43) eine fünfte Befestigung (50) an einem dem ersten distalen Ende (49) entgegengesetzten zweiten distalen Ende (51) umfasst.

4. Befestigungsstruktur (3) nach einem der Ansprüche 1 bis 3, wobei die dritte und vierte Strebe (52, 54) jeweils einen Toleranzausgleicher (57) umfassen und/oder die erste Schnittstellenstrebe (19) mindestens einen Toleranzausgleicher (57) umfasst und/oder die zweite Schnittstellenstrebe (21) mindestens einen Toleranzausgleicher (57) umfasst.

5. Befestigungsstruktur (3) nach einem der Ansprüche 1 bis 4, wobei der längliche Körper (17) des ersten Moduls (10) mindestens eine Vorrichtung (18) zum Montieren des Monuments (6) an dem ersten Modul (10) umfasst und/oder das zweite Modul (10) mindestens eine Vorrichtung (18) zum Montieren des Überkopf-Gepäckfachs (5, 7) am zweiten Modul (10) umfasst und/oder der längliche Abstandhalterkörper (17) mindestens eine Vorrichtung (18) zum Montieren eines Abstandhalterpaneels (8, 9) am Abstandhaltermodul (40) umfasst.

6. Befestigungsstruktur (3) nach einem der Ansprüche 1 bis 5, wobei der längliche Abstandhalterkörper (41) mit dem länglichen Körper (17) des ersten Moduls (10) und/oder des zweiten Moduls (10) ausgerichtet und lösbar damit verbunden ist.

7. Befestigungsstruktur (3) nach einem der Ansprüche 1 bis 6, wobei das erste Modul (10) und das zweite Modul (10) jeweils ferner eine fünfte Strebe (23) umfassen, die sich von dem länglichen Körper (17) zu einer sechsten Befestigung zum Befestigen des jeweiligen Moduls (10) an der Anbringungsstruktur (2) an einer von der ersten Befestigung (20) beabstandeten Position erstreckt.

8. Fahrzeug (100), umfassend:
eine erste Anbringungsstruktur (2) eines Innenraums (101) des Fahrzeugs (100);
die Befestigungsstruktur (3) nach einem der Ansprüche 1 bis 7;
wobei die erste Befestigung (20) des ersten Moduls, die erste Befestigung (20) des zweiten Moduls (10) und die dritte Befestigung (48) des Abstandhaltermoduls (40) an der ersten Anbringungsstruktur (2) befestigt sind.

9. Fahrzeug (100) nach Anspruch 8, wobei das Fahrzeug (100) ein Flugzeug ist und ferner eine zweite Anbringungsstruktur (11') umfasst, wobei die erste und zweite Anbringungsstruktur (2) Rumpfspante (11, 11') sind, die entlang der Längsrichtung des Flugzeugs (100) beabstandet sind.

10. Fahrzeug (100) nach Anspruch 9, wobei sich die erste und zweite Schnittstellenstrebe (42, 43) des Abstandhaltermoduls (40) zwischen der ersten und zweiten Anbringungsstruktur (11, 11') erstrecken.

11. Fahrzeug (100) nach Anspruch 10, wobei die Anbringungsstruktur (2) ein erster Rumpfspant (11) ist, wobei die erste, zweite und dritte Befestigung (20, 44, 48) am ersten Rumpfspant (11) befestigt sind und die vierte und fünfte Befestigung (46, 50) an einem zweiten Rumpfspant (11') befestigt sind, sodass sich die erste und zweite längliche Schnittstellenstrebe (42, 43) zwischen dem ersten und zweiten Rumpfspant (11, 11') erstrecken.

12. Fahrzeug (100) nach einem der Ansprüche 8 bis 11, wobei die erste Schnittstellenstrebe (42) mit der ersten Befestigung (20) des ersten Moduls (10) ausgerichtet und lösbar damit verbunden ist.

13. Fahrzeug (100) nach einem der Ansprüche 8 bis 12, ferner umfassend eine erste Komponente (5, 7), die an dem ersten Modul (10) montiert ist, eine zweite Komponente (6), die an dem zweiten Modul (10) montiert ist, und ein Abstandhalterpaneel (8, 9), das an dem Abstandhaltermodul (40) montiert ist.

14. Fahrzeug nach Anspruch 13, wobei die erste Komponente ein Überkopf-Gepäckfach (5, 7) ist und die zweite Komponente ein Monument (6) ist.

## Revendications

1. Structure de fixation (3) pour un monument(6) et un bac de rangement suspendu (5, 7), la structure de fixation (3) pouvant être montée sur une structure d'attache (2) de l'intérieur d'un véhicule (100),
dans laquelle la structure de fixation (3) comprend au moins un premier module (10) pour le monument, au moins un second module (10) pour le bac de rangement suspendu et un module d'espacement (40) disposé latéralement, dans la position installée, entre le premier module (10) et le second module (10) dans la direction longitudinale du véhicule,
dans laquelle le premier module (10) et le second module (10) comprennent chacun un corps allongé (17), une première entretoise (19) accouplée de manière détachable entre le corps allongé (17) et un premier élément de fixation (20) permettant de fixer le module (10) à la structure d'attache (2), et une deuxième entretoise (21) accouplée de manière détachable entre le corps allongé (17) et le premier élément de fixation (20) et s'étendant suivant un angle incliné par rapport au corps allongé (17), dans laquelle la première entretoise (19) et/ou la deuxième entretoise (21) peuvent être positionnées de manière variable par rapport au corps allongé (17) pour assurer une compensation de tolérance et peuvent être verrouillées dans une position terminale,
**caractérisée en ce que** le module d'espacement (40) comprend un corps d'espacement allongé (41), une première entretoise d'interface allongée (42) ayant un deuxième élément de fixation permettant de fixer le module d'espacement (40) à la structure d'attache (2) et une seconde entretoise d'interface (43) ayant un troisième élément de fixation permettant de fixer le module d'espacement (40) à la structure d'attache (2), dans laquelle le corps d'espacement allongé (41) est accouplé de manière détachable par une troisième entretoise (52) à la première entretoise d'interface (42) au niveau d'une première jonction (53) au milieu de la longueur de la première entretoise d'interface (42) et est accouplé de manière détachable par une quatrième entretoise (54) à la seconde entretoise d'interface (43) au niveau d'une seconde jonction (55) au milieu de la longueur de la seconde entretoise d'interface (43) et est accouplé au corps allongé (17) de chaque module (10),
dans laquelle la première entretoise d'interface (42), la seconde entretoise d'interface (43) et le corps d'espacement allongé (17) s'étendent sensiblement parallèlement l'un à l'autre, la troisième entretoise (52) s'étend sensiblement perpendiculairement entre le corps d'espacement allongé (41) et la première entretoise d'interface (42) et la quatrième entretoise (54) s'étend à un certain angle entre le corps d'espacement allongé (41) et la seconde entretoise d'interface (43).

2. Structure de fixation (3) selon la revendication 1, dans laquelle les troisième et quatrième entretoises (52, 54) sont accouplées à une extrémité distale du corps d'espacement allongé (41).

3. Structure de fixation (3) selon l'une quelconque des revendications 1 ou 2, dans laquelle le deuxième élément de fixation (44) est disposé à une première extrémité distale (45) de la première entretoise d'interface (42) et la première entretoise d'interface (42) comprend un quatrième élément de fixation (46) à une seconde extrémité distale (47) qui est opposée à la première extrémité distale (45) et dans laquelle le troisième élément de fixation (48) est disposé à une première extrémité distale (49) de la seconde entretoise d'interface (43) et la seconde entretoise d'interface (43) comprend un cinquième élément de fixation (50) à une seconde extrémité distale (51) qui est opposée à la première extrémité distale (49).

4. Structure de fixation (3) selon l'une quelconque des revendications 1 à 3, dans laquelle les troisième et quatrième entretoises (52, 54) comprennent chacune un compensateur de tolérance (57) et/ou la première entretoise d'interface (19) comprend au moins un compensateur de tolérance (57) et/ou la seconde entretoise d'interface (21) comprend au moins un compensateur de tolérance (57).

5. Structure de fixation (3) selon l'une quelconque des revendications 1 à 4, dans laquelle le corps allongé (17) du premier module (10) comprend au moins une monture (18) pour monter le monument (6) sur le premier module (10), et/ou le second module (10) comprend au moins une monture (18) pour monter le bac de rangement suspendu (5, 7) sur le second module (10) et/ou le corps d'espacement allongé (17) comprend au moins une monture (18) pour monter un panneau d'espacement (8, 9) sur le module d'espacement (40).

6. Structure de fixation (3) selon l'une quelconque des revendications 1 à 5, dans laquelle le corps d'espacement allongé (41) est aligné avec et relié de façon amovible au corps allongé (17) du premier module (10) et/ou du second module (10).

7. Structure de fixation (3) selon l'une quelconque des revendications 1 à 6, dans laquelle le premier module (10) et le second module (10) comprennent chacun en outre une cinquième entretoise (23) qui s'étend depuis le corps allongé (17) vers un sixième élément de fixation pour fixer le module respectif (10) à la structure d'attache (2) à une position espacée du premier élément de fixation (20).

8. Véhicule (100), comprenant :
une première structure d'attache (2) de l'intérieur (101) du véhicule (100) ;
la structure de fixation (3) selon l'une quelconque des revendications 1 à 7 ;
dans lequel le premier élément de fixation (20) du premier module, le premier élément de fixation (20) du second module (10) et le troisième élément de fixation (48) du module d'espacement (40) sont fixés à la première structure d'attache (2).

9. Véhicule (100) selon la revendication 8, le véhicule (100) étant un aéronef et comprenant en outre une seconde structure d'attache (11'), dans lequel les première et seconde structures d'attache (2) sont des cadres de fuselage (11, 11') qui sont espacés dans la direction longitudinale de l'aéronef (100).

10. Véhicule (100) selon la revendication 9, dans lequel les première et seconde entretoises d'interface (42, 43) du module d'espacement (40) s'étendent entre les première et seconde structures d'attache (11, 11').

11. Véhicule (100) selon la revendication 10, dans lequel la structure d'attache (2) est un premier cadre de fuselage (11), les premier, deuxième et troisième éléments de fixation (20, 44, 48) sont fixés au premier cadre de fuselage (11) et les quatrième et cinquième éléments de fixation (46, 50) sont fixés à un second cadre de fuselage (11') de telle sorte que les première et seconde entretoises d'interface allongées (42, 43) s'étendent entre les premier et second cadres de fuselage (11, 11').

12. Véhicule (100) selon l'une quelconque des revendications 8 à 11, dans lequel la première entretoise d'interface (42) est alignée avec et reliée de façon amovible au premier élément de fixation (20) du premier module (10).

13. Véhicule (100) selon l'une quelconque des revendications 8 à 12, comprenant en outre un premier composant (5, 7) monté sur le premier module (10), un second composant (6) monté sur le second module (10) et un panneau d'espacement (8, 9) monté sur le module d'espacement (40).

14. Véhicule selon la revendication 13, dans lequel le premier composant est un bac de rangement suspendu (5, 7) et le second composant est un monument (6).
